# EUROPEAN PATENT APPLICATION

(11) **EP 4 651 057 A1**
(43) Date of publication of application: **19.11.2025**
(21) Application number: 23915663.1
(22) Date of filing: 30.10.2023
(51) Int. Cl.: G06Q 20/40

(54) **DATA QUANTUM COMPUTING MANAGEMENT AND CONTROL METHOD AND APPARATUS, DEVICE, AND COMPUTER MEDIUM**

(30) Priority: 09.01.2023 CN 202310028924
(71) Applicant: Yangtze Delta Industrial Innovation Center of Quantum Science and Technology, Suzhou, Jiangsu 215000 (CN)
(72) Inventor: CAI, Jian, Suzhou, Jiangsu 215000 (CN); LU, Jun, Suzhou, Jiangsu 215000 (CN)
(74) Representative: Cabinet Chaillot
(86) International application number: PCT/CN2023/127526
(87) International publication number: WO 2024/148905

(57) **Abstract**

A data quantum computing management and control method and apparatus, a apparatus, and a computer medium, which are applied to a data management and control server. The method comprises: receiving a data management and control service request sent by a target service object connected to a data management and control server, in response to the data management and control service request, detecting target risk information of the target service object being cracked by quantum computing; on the basis of the target risk information, generating a data management and control instruction; and transmitting to the target service object the data management and control instruction, such that the target service object performs data management and control on the basis of the data management and control instruction. In the present disclosure, the data management and control server can detect, in response to the data management and control service request of the target service object, the target risk information of the target service object being cracked by quantum computing, and can generate the data management and control instruction on the basis of the target risk information and transmit same to the target service object, so as to perform data management and control on the basis of the target risk information of the target service object being cracked by quantum computing, improving the security of data management and control.

## Description

The present disclosure claims priority to the Chinese patent application submitted to the CNIPA on January 9, 2023 with the application number of 202310028924.1, entitled "Data quantum computing management and control method and apparatus, device, and computer medium", and the entire content of which is incorporated herein by reference.

### TECHNICAL FIELD

The present disclosure relates to a technical field of data management and control, quantum information and fintech technology, particularly to a data quantum computing management and control method, apparatus and device and computer medium.

### BACKGROUND

At present, the corresponding data can be assigned to the user according to the user's needs, attributes are given to the data, and finally the corresponding operations of the user can be managed and controlled with the help of the data management and control. For example, banks can distribute data to users as digital currency, i.e., DC (Digital Currency)/EP (Electronic Payment), and manage and control users with the aid of the digital currency. For another example, a server may distribute data to the information transmitted by the user as a key, and manage and control the information transmission operation of the user with the aid of the key. In other words, the user's needs may be met by means of the data management and control method.

However, data security is an issue to be considered in the process of data management and control. In order to solve this problem, the data can be safely managed and controlled through biometric identity authentication and data encryption and decryption, such as face recognition, fingerprint verification, iris verification and other biometrics, and combined with the data encryption set method to carry out management and control of data security. However, user's biometric identification and authentication cannot completely guarantee data security. For example, the risk of face identification and authentication is that face information is biological information that is highly vulnerable to leakage. In the environment filled with surveillance and cameras, face information is easy to be captured and copied, which will reduce the accuracy and security of face recognition to a certain extent. However, the secret key in the existing encryption method has the possibility of being captured, then disassembled and thus cracked, and the secure encryption of the user's login to the authentication system via the Internet Protocol faces the risk of being cracked and rewritten. In addition, if the control records of a large number of control services stored in the traditional computer are tampered or falsified, the false management and control amount in the data management and control method will be increased. Particularly, the quantum computer has the capability of invalidating the traditional network security mechanism, and it is difficult to guarantee that the data management and control process of traditional encryption method cannot be cracked by quantum computing. Although the risk of quantum computing cracking can be reduced by extending the key length, the way of extending the key length leads to a significant reduction in the efficiency of information processing. Taking the commonly used RSA encryption algorithm as an example, if the key length is doubled, the time required for public key operation increases by about 4 times, the time required for private key operation increases by about 8 times, the time required for public and private key generation increases by about 16 times, and the content of the communication may be cracked or rewritten by the quantum computer. Accordingly, there is a risk of data leakage and breach in the blockchain and network database, which greatly increases the possibility of the data management and control process being cracked and the data on the blockchain and the Internet being tampered.

To sum up, how to manage and control data security is an urgent problem to be solved by those skilled in the art.

### SUMMARY

The present disclosure aims at providing a data quantum computing management and control method, which can solve the technical problem of how to securely manage and control data to a certain extent. The present disclosure further provides a data quantum computing management and control apparatus and device and computer medium.

In order to achieve the above purpose, the present disclosure provides the following technical solution:

A data quantum computing management and control method, which is applied to a data management and control server, comprising:
receiving a data management and control service request sent by a target service object connected with the data management and control server;
in response to the data management and control service request, detecting a target risk information of the target service object cracked by quantum computing;
generating a data management and control instruction based on the target risk information; and
transmitting the data management and control instruction to the target service object, so that the target service object performs data management and control based on the data management and control instruction.

Alternatively, detecting a target risk information of the target service object cracked by quantum computing comprises:
monitoring a real-time operation computing active state of the target service object in connection with the quantum computer;
acquiring a registration authorization security level of the target service object;
determining a preset operation computing active state corresponding to the registration authorization security level;
determining a deviation value between the real-time operation computing active state and the preset operation computing active state; and
determining the target risk information based on the deviation value if the deviation value exceeds a quantum computing cracking threshold.

Alternatively, both the real-time operation computing active state and the preset operation computing active state comprise a calling algorithm, processing time, data storage capacity, and network connection information.

Alternatively, detecting a target risk information of the target service object cracked by quantum computing comprises:
acquiring a target quantum computer in a network domain where the target service object is located based on a computing power server connected with the data management and control server;
monitoring a secret key generation time node of the target service object;
calculating a time interval between the secret key generation time node and a current time;
if the time interval exceeds a target duration of the target quantum computer, determining the target risk information based on the time interval and the target duration;
wherein the target duration comprises a sum of a cracking computing duration and a data transmission duration of the target quantum computer, the cracking computing duration comprising a duration of the target quantum computer for cracking a security authentication algorithm of the target service object.

Alternatively, determining the target risk information based on the time interval and the target duration comprises:
calculating a target state deviation value between the time interval and the target duration; and
determining the target risk information corresponding to the target state deviation value based on a corresponding relationship between a preset state deviation value and the risk information.

Alternatively, the method further comprises:
periodically updating a quantum computing cracking information table of the security authentication algorithm, wherein the quantum computing cracking information table comprises an algorithm type, a secret key length, a quantum computing resource requirement and a cracking computing duration.

Alternatively, the method further comprises:
identifying the security authentication algorithm of the target service object.

Alternatively, the method further comprises:
identifying an authorization security level and a technical implementation security level of the target service object.

Alternatively, prior to receiving a data management and control service request sent by a target service object connected with the data management and control server, the method further comprises:
generating a management and control trigger condition and sending the management and control trigger condition to the target service object; and
receiving a data management and control service request sent by a target service object connected with the data management and control server comprises:
receiving the data management and control service request sent by the target service object after meeting the management and control trigger condition.

Alternatively, the target service object comprises a digital currency wallet and/or a digital currency transaction node, and the data management and control service request comprises a digital currency management and control request.

A data quantum computing management and control apparatus, comprising a data management and control server, wherein the data management and control server comprises:
a receiving port for receiving a data management and control service request sent by a target service object connected with the data management and control server;
a detector for detecting a target risk information of the target service object cracked by quantum computing in response to the data management and control service request;
a generator for generating a data management and control instruction based on the target risk information; and
a transmission port for transmitting the data management and control instruction to the target service object, so that the target service object performs data management and control based on the data management and control instruction.

Alternatively, the apparatus further comprises:
a computing power server connected with the data management and control server for acquiring a target quantum computer in a network domain where the target service object is located and transmitting the target quantum computer to the data management and control server.

Alternatively, the apparatus further comprises:
a management and control database connected with the computing power server for storing information.

Alternatively, the apparatus further comprises:
a trusted service manager connected with the computing power server for managing and controlling the data in the target service object by a trusted third party.

An electronic device, comprising:
a memory for storing a computer program; and
a processor for implementing the steps of a data quantum computing management and control method according to any one of the above steps when executing the computer program.

A computer-readable storage medium, the computer-readable storage medium has a computer program stored thereon, the computer program being executed by a processor to implement the steps of a data quantum computing management and control method according to any one of the above steps.

The data quantum computing management and control method provided by the present disclosure, which is applied to a data management and control server, comprises: receiving a data management and control service request sent by a target service object connected with the data management and control server; in response to the data management and control service request, detecting a target risk information of the target service object cracked by quantum computing; generating a data management and control instruction based on the target risk information; and transmitting the data management and control instruction to the target service object, so that the target service object performs data management and control based on the data management and control instruction. In the application, a data management and control server can respond to a data management and control service request of a target service object to detect target risk information of the target service object cracked by quantum computing, and can generate a data management and control instruction based on the target risk information to transmit the data management and control instruction to the target service object; therefore, the target service object performs data management and control based on the data management and control instruction, corresponding to that data management and control can be performed based on the target risk information of the target service object cracked by quantum computing, and the security of data management and control can be improved. The data quantum computing management and control apparatus and device and computer medium provided by the present disclosure also solve the corresponding technical problem.

### BRIEF DESCRIPTION OF THE DRAWINGS

In order to more clearly explain the technical solutions in the embodiments of the present disclosure or the prior art, drawings required in the embodiments or the prior art will be briefly described below. Obviously, the drawings in the following description are some embodiments of the present disclosure. For those skilled in the art, other drawings may be obtained from these drawings without any creative effort.
FIG. 1 is a first flow diagram of a data quantum computing management and control method provided by an embodiment of the present disclosure;
FIG. 2 is a second flow diagram of a data quantum computing management and control method provided by an embodiment of the present disclosure;
FIG. 3 is a schematic structural diagram of a data quantum computing management and control apparatus provided by an embodiment of the present disclosure;
FIG. 4 is a schematic structural diagram of a data quantum computing management and control apparatus, which is applied to a digital wallet, provided by an embodiment of the present disclosure;
FIG. 5 is a schematic structural diagram of an electronic device provided by an embodiment of the present disclosure;
FIG. 6 is another schematic structural diagram of an electronic device provided by an embodiment of the present disclosure.

### DETAILED DESCRIPTION OF THE EMBODIMENTS

The technical solutions of the embodiments of the present disclosure will be described clearly and completely as follows with reference to the drawings in the embodiments of present disclosure. Obviously, the described embodiments are part of, but not all of, the embodiments of the present disclosure. Based on the embodiments of the present disclosure, all the other embodiments obtained by those skilled in the art without paying any creative work fall within the protection scope of the present disclosure.

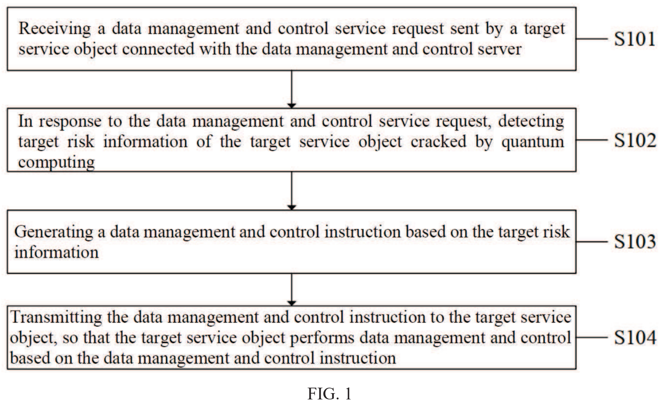

With reference to FIG. 1, FIG. 1 is a first flow diagram of a data quantum computing management and control method provided by an embodiment of the present disclosure.

A data quantum computing management and control method provided in the embodiments of the present disclosure is applied to a data management and control server, comprising the following steps:
Step S101: receiving a data management and control service request sent by a target service object connected with the data management and control server.

In practical application, the data management and control server may first receive a data management and control service request sent by a target service object connected with the data management and control server, so as to perform corresponding data management and control processing based on the data management and control service request.

It should be noted that the types of the target service object and the data management and control service request can be determined according to actual needs, for example, the target service object may be a server, and the data management and control service request may be a log management and control request; for example, the target service object may be a user client, and the data management and control service may be a transmission data management and control request; and for example, the target service object may be a digital currency wallet and/or a digital currency transaction node, and the data management and control service request may be a digital currency management and control request. The present disclosure is not specifically limited herein.

Step S102: in response to the data management and control service request, detecting a target risk information of the target service object cracked by quantum computing.

In practical application, after receiving a data management and control service request sent by a target service object connected with the data management and control server, the data management and control server can detect target risk information of the target service object cracked by quantum computing in response to the data management and control service request, so as to record and provide feedback on the danger of the target service object cracked by quantum computing by means of the target risk information.

In a specific application scene, the type of the target risk information may be determined according to actual needs, for example, the target risk information may be a risk level of the target service object to be cracked by quantum computing; for example, the target risk information may be a duration of the target service object to be cracked by quantum computing; and for example, the target risk information may be a security guarantee time of the target service object to resist quantum computing cracking, etc. Moreover, it should be noted that the type of quantum computing cracking can be determined according to actual needs, for example, the quantum computing cracking can be a security algorithm for quantum computing to crack the target service object, a security key for quantum computing to crack the target service object, and the information for the quantum computing to tamper the target service object, etc. The present disclosure is not specifically limited herein.

Step S103: generating a data management and control instruction based on the target risk information.

Step S104: transmitting the data management and control instruction to the target service object, so that the target service object performs data management and control based on the data management and control instruction.

In practical application, the data management and control server can generate a data management and control instruction based on the target risk information after detecting the target risk information of the target service object cracked by quantum computing. For example, an instruction for the target service object to abandon the data management and control operation is generated based on the target risk information, an instruction for the target service object to complete the data management and control operation within the target time is generated based on the target risk information, and then the data management and control instruction is transmitted to the target service object, so that the target service object can perform data management and control based on the data management and control instruction, realizing identification, early warning, elimination, etc., of quantum computing.

In a specific application scene, the type of data management and control performed by the target service object can be determined according to actual needs, for example, the data management and control performed by the target service object can be used to increase, decrease, eliminate, transmit, or change the ownership of its own target value. The present disclosure is not specifically limited herein.

For easy understanding, assuming that the target service object is a user client and the data management and control request is a transmission data management and control request, the management and control process of data transmission of the user client may be as follows: the data management and control server receives a transmission data management and control service request sent by a connected user client, responds to the transmission data management and control service request, detects the target risk information of the user client cracked by quantum computing, generates a data management and control instruction based on the target risk information, and transmits the data management and control instruction to the user client, so that the user client performs management and control of transmission data based on the data management and control instruction, for example, abandoning the transmission data and the like.

The data quantum computing management and control method provided by the present disclosure, which is applied to a data management and control server, comprises: receiving a data management and control service request sent by a target service object connected with the data management and control server; in response to the data management and control service request, detecting a target risk information of the target service object cracked by quantum computing; generating a data management and control instruction based on the target risk information; and transmitting the data management and control instruction to the target service object, so that the target service object performs data management and control based on the data management and control instruction. In the application, a data management and control server can respond to a data management and control service request of a target service object to detect target risk information of the target service object cracked by quantum computing, and can generate a data management and control instruction based on the target risk information to transmit the data management and control instruction to the target service object; therefore, the target service object performs data management and control based on the data management and control instruction, corresponding to that data management and control can be performed based on the target risk information of the target service object cracked by quantum computing, and the security of data management and control can be improved.

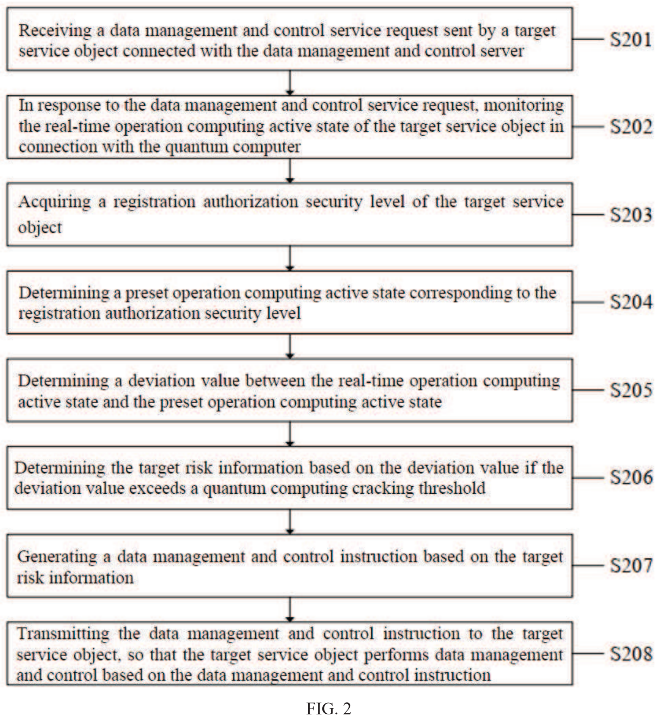

With reference to FIG. 2, FIG. 2 is a second flow diagram of a data quantum computing management and control method provided by an embodiment of the present disclosure.

A data quantum computing management and control method provided in the embodiments of the present disclosure is applied to a data management and control server, comprising the following steps:
Step S201: receiving a data management and control service request sent by a target service object connected with the data management and control server.
Step S202: in response to the data management and control service request, monitoring a real-time operation computing active state of the target service object in connection with the quantum computer.
Step S203: acquiring a registration authorization security level of the target service object.
Step S204: determining a preset operation computing active state corresponding to the registration authorization security level.
Step S205: determining a deviation value between the real-time operation computing active state and the preset operation computing active state.
Step S206: determining the target risk information based on the deviation value if the deviation value exceeds a quantum computing cracking threshold.

In practical application, the data management and control server can detect the target risk information through the state difference of the target service object under the quantum computer in order to quickly and effectively determine the target risk information in the process of detecting the target risk information of the target service object cracked by quantum computing, for example, monitoring a real-time operation computing active state of the target service object in connection with the quantum computer; and acquiring a registration authorization security level of the target service object, the registration authorization security level being also the authorization security level determined after the target service object is registered on the data management and control server; then determining a preset operation computing active state corresponding to the registration authorization security level; determining a deviation value between the real-time operation computing active state and the preset operation computing active state; and determining the target risk information based on the deviation value if the deviation value exceeds a quantum computing cracking threshold. It should be noted that, when the target service object is registered on the data management and control server, it can be registered based on information such as owner information, user information, service range, service type, data requirements, etc., of the target service object. The present disclosure is not specifically limited herein.

In specific application, after the deviation value between the real-time operation computing active state and the preset operation computing active state is determined, and the deviation value exceeds a quantum computing cracking threshold, in order to further determine the accurate target risk information, the target risk information can be divided into risk information of different levels according to the difference value between the deviation value and the quantum computing cracking threshold in advance, and finally, the corresponding target risk information is determined according to the specific difference values between the deviation value and the quantum computing cracking threshold.

In a specific application scene, the data types of the real-time operation computing active state and the preset operation computing active state may be determined according to actual needs, for example, both may include a calling algorithm, processing time, data storage capacity, and network connection information, etc.

In practical application, the data management and control server can monitor the target service object in real time in the process of detecting the target risk information of the target service object cracked by quantum computing in order to obtain real-time and effective target risk information. Specifically, the data management and control server may acquire a target quantum computer in a network domain where the target service object is located based on a computing power server connected with the data management and control server; monitor a secret key generation time node of the target service object; calculate a time interval between the secret key generation time node and a current time; if the time interval exceeds a target duration of the target quantum computer, determine the target risk information based on the time interval and the target duration; wherein the target duration comprises a sum of a cracking computing duration and a data transmission duration of the target quantum computer, the cracking computing duration comprising a duration of the target quantum computer for cracking a security authentication algorithm of the target service object.

In a specific application scene, in the process of determining the target risk information based on the time interval and the target duration, the target state deviation value between the time interval and the target duration can be calculated; and the target risk information corresponding to the target state deviation value based on a corresponding relationship between a preset state deviation value and the risk information can be determined, so as to accurately determine the target risk information of the target service object.

In a specific application scene, in order to determine the target duration of the target quantum computer, the data management and control server may also save the quantum computing cracking information table of the security authentication algorithm of the target service object. For example, the quantum computing cracking information table is stored in a management and control database connected to the computing power server, and the quantum computing cracking information table comprises an algorithm type, a secret key length, a quantum computing resource requirement and a cracking computing duration. In this way, when the data management and control server needs to know the corresponding quantum computing cracking information of the target service object, it can directly query the quantum computing cracking information table to obtain the corresponding information quickly. Correspondingly, in order to ensure the effectiveness of the quantum computing cracking information table, the data management and control server may also periodically update a quantum computing cracking information table of the security authentication algorithm. It should be noted that the content of the quantum computing cracking information table may be determined according to actual needs, for example, the quantum computing cracking information table may be as shown in Table 1.

**Table 1 Quantum computing cracking information table**

| Algorithm type | Secret key length | Quantum computing resource requirement (logic bit) | Cracking computing duration (hour) |
|---|---|---|---|
| RSA | 2048 | 6190 | 0.34 |
| RSA | 3072 | 9288 | 1.14 |
| RSA | 7680 | 23239 | 18.9 |
| ECDSA | 256 | 2619 | 0.89 |
| ECDSA | 384 | 3901 | 1.00 |
| ECDSA | 512 | 5273 | 1.56 |

Step S207: generating a data management and control instruction based on the target risk information.

Step S208: transmitting the data management and control instruction to the target service object, so that the target service object performs data management and control based on the data management and control instruction.

In practical application, in order to facilitate the data management and control server to manage and control the quantum computing cracking risk of the target service object, the data management and control server may also identify the security authentication algorithm of the target service object, for example, identifying the computing power of the target service object for various types of security authentication algorithms, wherein the computing power may include information processing capability, data processing capacity, data storage capacity and other computing power information of a classical computing algorithm and/or a quantum computing algorithm; and/or identifying the authorized security level and the technical implementation security level of the target service object, etc.

In practical application, in order to facilitate the target service object to generate the data management and control service request, before receiving the data management and control service request sent by the target service object connected with the data management and control server, the data management and control server may also generate a management and control trigger condition, and send the management and control trigger condition to the target service object. Correspondingly, in the process of receiving the data management and control service request sent by the target service object connected with the data management and control server, the data management and control service request sent by the target service object after meeting the management and control trigger condition can be received. It should be noted that the type of the management and control trigger condition can be determined according to the specific application scenes. For example, the management and control trigger condition can be a security detection trigger condition, an owner compliance detection trigger condition, a data range detection condition, etc. In addition, in a specific application scene, the data management and control server may record the data management and control process of the target service object as required. The present disclosure is not specifically limited herein.

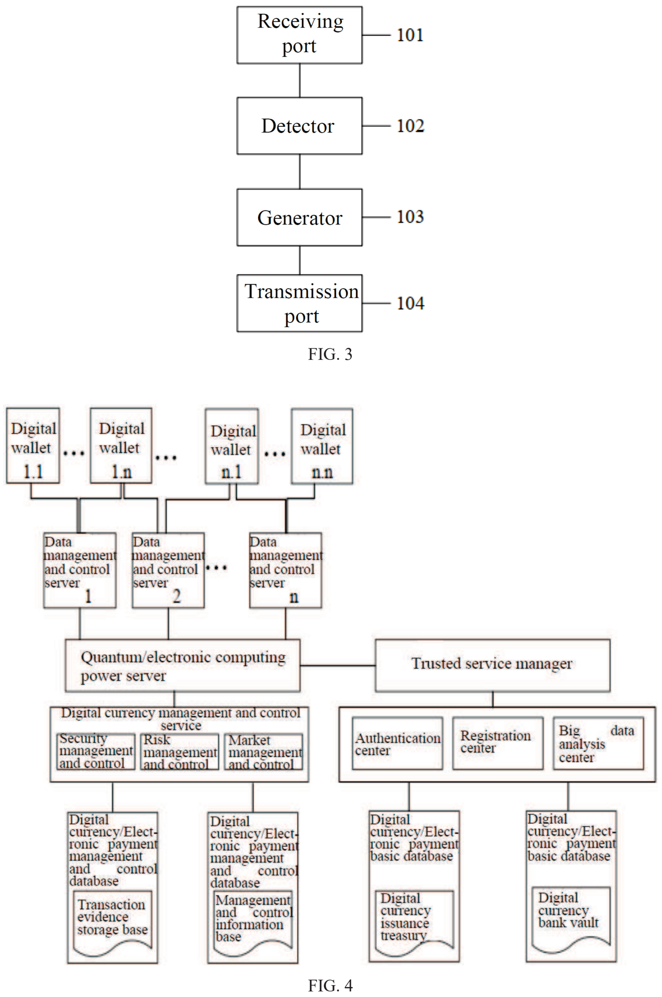

With reference to FIG. 3, FIG. 3 is a schematic structural diagram of a data quantum computing management and control apparatus provided by an embodiment of the present disclosure.

A data quantum computing management and control apparatus provided in the embodiments of the present disclosure comprises a data management and control server, the data management and control server comprising:
a receiving port 101 for receiving a data management and control service request sent by a target service object connected with the data management and control server;
a detector 102 for detecting a target risk information of the target service object cracked by quantum computing in response to the data management and control service request;
a generator 103 for generating a data management and control instruction based on the target risk information; and
a transmission port 104 for transmitting the data management and control instruction to the target service object, so that the target service object performs data management and control based on the data management and control instruction.

According to the data quantum calculation management and control apparatus provided by the embodiment of the present disclosure, in the process of detecting the target risk information of a target service object cracked by quantum computing, the detector can monitor the real-time operation computing active state of the target service object connected with a quantum computer; acquire a registration authorization security level of the target service object; determine a preset operation computing active state corresponding to the registration authorization security level; determine a deviation value between the real-time operation computing active state and the preset operation computing active state; and determine the target risk information based on the deviation value if the deviation value exceeds a quantum computing cracking threshold.

According to the data quantum calculation management and control apparatus provided by the embodiment of the present disclosure, both the real-time operation computing active state and the preset operation computing active state comprise a calling algorithm, processing time, data storage capacity, and network connection information.

According to the data quantum calculation management and control apparatus provided by the embodiment of the present disclosure, in the process of detecting the target risk information of a target service object cracked by quantum computing, the detector can acquire a target quantum computer in a network domain where the target service object is located based on a computing power server connected with the data management and control server; monitor a secret key generation time node of the target service object; calculate a time interval between the secret key generation time node and a current time; if the time interval exceeds a target duration of the target quantum computer, determine the target risk information based on the time interval and the target duration; wherein the target duration comprises a sum of a cracking computing duration and a data transmission duration of the target quantum computer, the cracking computing duration comprising a duration of the target quantum computer for cracking a security authentication algorithm of the target service object.

According to the data quantum calculation management and control apparatus provided by the embodiment of the present disclosure, in the process of determining the target risk information based on the time interval and the target duration, the detector may calculate the target state deviation value between the time interval and the target duration; and determine the target risk information corresponding to the target state deviation value based on a corresponding relationship between a preset state deviation value and the risk information.

The data quantum calculation management and control apparatus provided by the embodiment of the present disclosure further comprises:

An updater for periodically updating a quantum computing cracking information table of the security authentication algorithm, wherein the quantum computing cracking information table comprises an algorithm type, a secret key length, a quantum computing resource requirement and a cracking computing duration.

The data quantum calculation management and control apparatus provided by the embodiment of the present disclosure further comprises:
A first identifier for identifying the security authentication algorithm of the target service object.

The data quantum calculation management and control apparatus provided by the embodiment of the present disclosure further comprises:
A second identifier for identifying an authorization security level and a technical implementation security level of the target service object.

The data quantum calculation management and control apparatus provided by the embodiment of the present disclosure further comprises:
A manager for generating a management and control trigger condition and sending the management and control trigger condition to the target service object before the receiving port receives the data management and control service request sent by the target service object connected with the data management and control server.

Accordingly, the receiving port may receive the data management and control service request sent by the target service object after meeting the management and control trigger condition.

According to the data quantum calculation management and control apparatus provided by the embodiment of the present disclosure, the target service object may comprise a digital currency wallet and/or a digital currency transaction node, and the data management and control service request may comprise a digital currency management and control request.

The data quantum computing management and control apparatus provided by the embodiment of the present disclosure further comprises:
A computing power server connected with the data management and control server for acquiring a target quantum computer in a network domain where the target service object is located and transmitting the target quantum computer to the data management and control server.

It should be noted that the computing power server may be a quantum computing power server or an electronic computing power server, etc. In addition, in a specific application scene, a plurality of data management and control servers may be required to perform data management and control on a plurality of target service objects. In the process, the computing power server can also perform computing scheduling on a plurality of data management and control servers, so as to meet the super-large computing demand of the target service object. It should also be noted that the computing power server can also manage and control the target service object according to actual needs, such as performing authenticity detection, registration verification, and duplication detection on the target service object. The present disclosure is not specifically limited herein.

The data quantum computing management and control apparatus provided by the embodiment of the present disclosure further comprises:
A management and control database connected with the computing power server for storing information.

The data quantum computing management and control apparatus provided by the embodiment of the present disclosure further comprises:
A trusted service manager connected with the computing power server for managing and controlling the data in the target service object by a trusted third party, for example, it is used for the trusted third party to authenticate, register and analyze the target service object.

To facilitate understanding of the data quantum computing management and control apparatus provided by the present disclosure, assuming that the target service object is a digital wallet, which may include a digital currency transaction node and a digital currency wallet, the structure of the data quantum computing management and control apparatus may be as shown in FIG. 4, and the management and control process of the digital currency may be as follows:
Data management and control servers deployed in digital currency control departments and banks identify and register digital wallets, for example, identify the security authentication algorithms used in digital wallets; identify the computing power of digital wallets for various types of transaction algorithms, including the information processing capability, data processing capacity, data storage capacity, and other computing power information of a classical computing algorithm and a quantum computing algorithm; identify the security level of the digital wallet, including a technical implementation security level and an authorization security level for registration; and register the information such as the nationality of the owner and user of the digital currency transaction node, the geographical scope of the transaction, the type of transaction and the amount requirement, etc.;
The data management and control server periodically updates the quantum computing cracking information table of the digital wallet;
The data management and control server detects the authorization security level and the technical implementation security level of the digital wallet, establishes a management and control protocol according to the digital currency laws and regulations, sets management and control trigger conditions and sends the management and control trigger conditions to the digital wallet; the management and control trigger conditions may include security level requirements of digital currency transaction, compliance of digital currency owner, digital currency transaction limit, etc.;
In the transaction process, the digital wallet sends an authentication and approval management and control service request to the data management and control server of the corresponding domain if it meets the preset management and control trigger conditions;
In response to the authentication and approval management and control service request, the data management and control server detects the target risk information of the digital wallet cracked by quantum computing either by itself or with the aid of the computing power server;
The data management and control server generates a data management and control instruction based on the target risk information and transmits the data management and control instruction to the digital wallet;
The digital wallet completes the digital currency transaction according to the data management and control instruction; and
The data management and control server records important transactions during the management and control process of digital wallet in a management and control database of the computing power server.

It should be noted that by means of the data quantum computing management and control apparatus provided in the present disclosure, the transaction process can be safely detected on the granularity of the digital wallet, obtaining good targeting and security. In addition, the quantum/electronic computing power server can also be connected with the bank's trusted service manager to provide large-scale node concurrent digital currency management and control services, which may include digital currency security management and control, digital currency risk management and control, and digital currency market management and control.

The security management and control may include digital currency authenticity monitoring, digital wallet security detection, complete authentication for preventing decryption by quantum computing, etc. At this time, in the process of digital currency transaction, the transaction center of the digital currency transaction node or the digital wallet sends a security request to the data management and control server, transmits information about the node or digital wallet with which it is transacted and the digital currency it transacts, and the data management and control server checks the registration condition of each transaction node or the digital wallet. If the transaction node or the registered wallet is inconsistent with the registration information, or the same digital currency is detected to have duplicate spending in different transactions, or security risks are monitored, or there is a possibility of being cracked by quantum computing, the data management and control server sends early warning information to the transaction node or the digital wallet, and the transaction node that receives the early warning information can terminate the transaction.

Risk management and control may include credit risk evaluation of digital currency transaction entity, monitoring of digital currency transaction risk, and early warning of transaction risk levels, etc. In the process, for a transaction entity consisting of a natural person or a legal person that owns a group of transaction nodes and digital wallets, the data management and control server analyzes the management and control record behaviors of the transaction nodes and the digital wallets through a machine learning algorithm, extracts the characteristics of the occurrence of security events of the management and control risk, thus further identifying and evaluating the comprehensive security risk of the natural person or the legal person. Regarding the nodes with frequent digital currency security risks or abnormal transaction termination, the data management and control server can lower the credit rating of the node, and early warnings are given to the transaction entity whose credit ratings are lower than the required rating of the exchange during the transaction, etc.

The market management and control may include digital currency financial control, digital currency cross-border transaction control, digital currency cross-domain transaction control, inter-market circulation control, emergency disaster control and other aspects. In the process, the data management and control server is connected with currency systems of other currencies and types to supervise the transaction behaviors of the cross-border transaction nodes and the digital wallet. According to the policies and regulations in emergency disasters, the data management and control server intervenes the transaction process of the digital currency transaction nodes and the digital currency wallet in a specific place and a specific market according to the policies and regulations, thus realizing the financial regulation and control of the digital currency and the like.

DC (Digital Currency)/EP (Electronic Payment) management and control database can be operated and maintained by digital currency management and control service, including digital currency transaction evidence storage base, and management and control information base, wherein the transaction evidence storage base stores the evidence for digital currency transactions according to the management and control agreement, which is used for compliance evidence collection and legal basis of the transaction. In addition, the management and control information base is to dynamically manage the management and control information of the digital currency laws, including the qualification of digital wallets and/or digital currency transaction nodes, credit information of transaction entities, transaction management and control rules, etc.

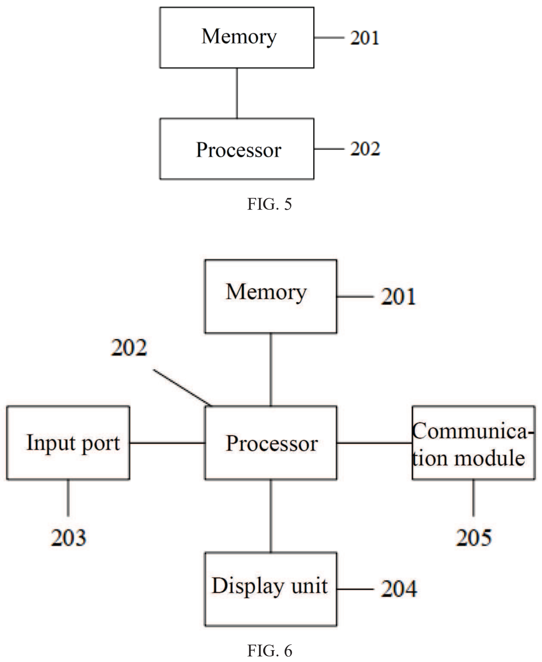

The present disclosure further provides an electronic device and a computer-readable storage medium, both of which have the corresponding effects of the data quantum computing management and control method provided by the embodiment of the present disclosure. With reference to FIG. 5, FIG. 5 is a schematic structural diagram of an electronic device provided by an embodiment of the present disclosure.

The present disclosure further provides an electronic device, comprising: a memory 201 for storing computer program; and a processor 202 for implementing the steps of a data quantum computing management and control method according to any one of the above embodiments when executing the computer program.

With reference to FIG. 6, another electronic device provided by the embodiment of the present disclosure further comprises: an input port 203 connected to the processor 202 for transmitting externally input commands to the processor 202; a display unit 204 connected to the processor 202 for displaying the processing results of the processor 202 to the outside; and a communication module 205 connected to the processor 202 for realizing communication between the electronic device and the outside. The display unit 204 may be a display panel, a laser scanning display, or the like. The communication mode used in the communication module 205 includes, but is not limited to, mobile high definition link technology (HML), universal serial bus (USB), high definition multimedia interface (HDMI), wireless connection: wireless fidelity technology (WiFi), Bluetooth communication technology, low power consumption Bluetooth communication technology, and IEEE802.11s based communication technology.

The embodiment of the present disclosure provides a computer-readable storage medium, the computer-readable storage medium having a computer program stored thereon, the computer program being executed by a processor to implement the steps of a data quantum computing management and control method according to any one of the above embodiments.

The computer-readable storage medium to which the present disclosure relates includes random access memory (RAM), memory, read-only memory (ROM), electrically programmable ROM, electrically erasable programmable ROM, a register, a hard disk, a removable diskette, a CD-ROM, or any other form of storage medium known in the art.

Regarding the description of relevant parts of the data quantum computing management and control apparatus, electronic device and computer-readable storage medium provided by the embodiments of the present disclosure, please refer to the detailed description of corresponding parts in the data quantum computing management and control method provided by the embodiments of the present disclosure, which will not be described in detail herein. In addition, the parts of the above technical solutions provided in the embodiments of the present disclosure that are consistent with the implementation principles of the corresponding technical solutions in the prior art have not been described in detail, so as to avoid excessive expressions.

Finally, it should also be noted that relationship terms such as first and second, etc. are used herein only to distinguish one entity or operation from another without necessarily requiring or implying any such actual relationship or order between those entities or operations. Moreover, the terms "comprise", "include" or any other variation thereof, are intended to cover a non-exclusive inclusion, such that a process, a method, an article, or an apparatus comprising a list of elements includes not only those elements, but also other elements not explicitly listed or may include elements inherent to the process, method, article, or apparatus. Without further limitation, an element defined by the statement of "comprising a..." does not exclude the further presence of additionally identical elements in a process, a method, an article or an apparatus comprising said element.

The above description of the disclosed embodiments enables those skilled in the art to implement or use the present disclosure. Various modifications to these embodiments will be apparent to those skilled in the art, and the general principles defined herein may be implemented in other embodiments without departing from the spirit or scope of the present disclosure. Accordingly, the present disclosure will not be limited to those embodiments shown herein, but will conform to the broadest scope consistent with the principles and novel features disclosed herein.

## Claims

1. A data quantum computing management and control method, which is applied to a data management and control server, comprising:
receiving a data management and control service request sent by a target service object connected with the data management and control server;
in response to the data management and control service request, detecting a target risk information of the target service object cracked by quantum computing;
generating a data management and control instruction based on the target risk information; and
transmitting the data management and control instruction to the target service object, so that the target service object performs data management and control based on the data management and control instruction.

2. The method of claim 1, wherein detecting a target risk information of the target service object cracked by quantum computing comprises:
monitoring a real-time operation computing active state of the target service object in connection with the quantum computer;
acquiring a registration authorization security level of the target service object;
determining a preset operation computing active state corresponding to the registration authorization security level;
determining a deviation value between the real-time operation computing active state and the preset operation computing active state; and
determining the target risk information based on the deviation value if the deviation value exceeds a quantum computing cracking threshold.

3. The method of claim 2, wherein both the real-time operation computing active state and the preset operation computing active state comprise a calling algorithm, processing time, data storage capacity, and network connection information.

4. The method of claim 1, wherein detecting a target risk information of the target service object cracked by quantum computing comprises:
acquiring a target quantum computer in a network domain where the target service object is located based on a computing power server connected with the data management and control server;
monitoring a secret key generation time node of the target service object;
calculating a time interval between the secret key generation time node and a current time;
if the time interval exceeds a target duration of the target quantum computer, determining the target risk information based on the time interval and the target duration;
wherein the target duration comprises a sum of a cracking computing duration and a data transmission duration of the target quantum computer, the cracking computing duration comprising a duration of the target quantum computer for cracking a security authentication algorithm of the target service object.

5. The method of claim 4, wherein determining the target risk information based on the time interval and the target duration comprises:
calculating a target state deviation value between the time interval and the target duration; and
determining the target risk information corresponding to the target state deviation value based on a corresponding relationship between a preset state deviation value and the risk information.

6. The method of claim 4, wherein the method further comprises:
periodically updating a quantum computing cracking information table of the security authentication algorithm, wherein the quantum computing cracking information table comprises an algorithm type, a secret key length, a quantum computing resource requirement and the cracking computing duration.

7. The method of any one of claims 1 to 5, wherein the method further comprises:
identifying the security authentication algorithm of the target service object.

8. The method of any one of claims 1 to 5, wherein the method further comprises:
identifying an authorization security level and a technical implementation security level of the target service object.

9. The method of claim 1, wherein prior to receiving a data management and control service request sent by a target service object connected with the data management and control server, the method further comprises:
generating a management and control trigger condition and sending the management and control trigger condition to the target service object; and
receiving a data management and control service request sent by a target service object connected with the data management and control server comprises:
receiving the data management and control service request sent by the target service object after meeting the management and control trigger condition.

10. The method of claim 1, wherein the target service object comprises a digital currency wallet and/or a digital currency transaction node, and the data management and control service request comprises a digital currency management and control request.

11. A data quantum computing management and control apparatus, comprising a data management and control server, wherein the data management and control server comprises:
a receiving port for receiving a data management and control service request sent by a target service object connected with the data management and control server;
a detector for detecting a target risk information of the target service object cracked by quantum computing in response to the data management and control service request;
a generator for generating a data management and control instruction based on the target risk information; and
a transmission port for transmitting the data management and control instruction to the target service object, so that the target service object performs data management and control based on the data management and control instruction.

12. The data quantum computing management and control apparatus of claim 11, wherein the apparatus further comprises:
a computing power server connected with the data management and control server for acquiring a target quantum computer in a network domain where the target service object is located and transmitting the target quantum computer to the data management and control server.

13. The data quantum computing management and control apparatus of claim 12, wherein the apparatus further comprises:
a management and control database connected with the computing power server for storing information.

14. The data quantum computing management and control apparatus of claim 13, wherein the apparatus further comprises:
a trusted service manager connected with the computing power server for managing and controlling the data in the target service object by a trusted third party.

15. An electronic device, comprising:
a memory for storing a computer program; and
a processor for implementing the data quantum computing management and control method as claimed in any one of claims 1 to 10 when executing the computer program.

16. A computer-readable storage medium, wherein the computer-readable storage medium has a computer program stored thereon, the computer program being executed by a processor to implement the steps of a data quantum computing management and control method as claimed in any one of claims 1 to 10.
